## Europäisches Patentamt
## European Patent Office
## Office européen des brevets

(19)

(11) Numéro de publication: **0 064 001**
**B1**

(12)

# FASCICULE DE BREVET EUROPÉEN

(45) Date de publication du fascicule du brevet:
**14.01.87**

(51) Int. Cl.⁴: **F 16 B 7/04**

(21) Numéro de dépôt: **82400706.6**

(22) Date de dépôt: **20.04.82**

(54) Dispositif d'assemblage selon un angle quelconque, notamment pour profilés creux.

(30) Priorité: **22.04.81 FR 8107978**

(43) Date de publication de la demande:
**03.11.82 Bulletin 82/44**

(45) Mention de la délivrance du brevet:
**14.01.87 Bulletin 87/3**

(84) Etats contractants désignés:
**BE CH DE FR GB IT LI LU NL**

(56) Documents cité:
**DE-A-2 609 388**
**FR-A-2 011 312**
**FR-A-2 378 971**
**US-A-2 994 414**

(73) Titulaire: **TECHNAL- FRANCE, 270 rue Léon Joulin,**
**F-31027 Toulouse Cedex (FR)**

(72) Inventeur: **Cavalie, Jean- François, Chemin des**
**Clottes, F-81600 Gaillac (FR)**
Inventeur: **Cassard, Michel, Mondouzil, F-31130**
**Balma (FR)**
Inventeur: **Mendez, Serge, 33 Lotissement des**
**Ecoles Roquette, F-31120 Portet sur Garonne (FR)**

(74) Mandataire: **Martin, Jean- Jacques, Cabinet**
**REGIMBEAU 26, Avenue Kléber, F-75116 Paris (FR)**

EP 0 064 001 B1

## Description

La présente invention concerne un dispositif d'assemblage de deux profilés creux, notamment de profilés métalliques, qu'ils soient du type dit "tubulaire" (à section fermée) ou du type dit "quasi-tubulaire" (à section ouverte).

Divers dispositifs connus permettent, lorsqu'il s'agit de former un angle, de réaliser un assemblage par rapprochement et mise en butée de deux profilés préalablement coupés d'onglet. (On entendra par "coupe d'onglet" une coupe en biseau de l'un et l'autre profilés, de telle sorte que la ligne de coupe constitue la bissectrice d'un angle d'assemblage de valeur quelconque, aigu ou obtus, sans que le terme d'"onglet" ne suggère d'aucune façon une restriction à un angle droit).

Ces divers dispositifs donnent pleinement satisfaction, mais ils ne sont prévus que pour un assemblage d'angle prédéterminé, le plus souvent un angle droit. Un premier type de ces dispositifs impose un angle droit par l'intermédiaire de pièces en forme de L ou analogues, rigides, placées à l'intérieur de l'un et l'autre des profilés à assembler et rendues solidaires de ces derniers. Un autre type de dispositif autorise une légère tolérance sur l'angle droit, en procédant par rapprochement et serrage de deux profilés l'un contre l'autre l'exactitude de l'angle droit étant assurée par la précision de la coupe d'onglet; les dispositifs de ce type peuvent utiliser soit une équerre légèrement déformable, soit (tel celui du US-A- 2 994 414) deux tirants disposés symétriquement, dont les premières extrémités respectives sont reliées par une liaison articulée, et comportant à leur seconde extrémité respective des moyens d'accrochage aux profilés.

Le dispositif selon l'invention, au contraire des précédents dispositifs, mais en conservant leurs avantages, permet de réaliser des assemblages selon un angle pouvant varier dans de très larges proportions. Par exemple, et à titre non limitatif, un dispositif universel tel que celui décrit ci-dessous permet de réaliser aisément des assemblages dont l'angle peut prendre toute valeur comprise entre 30° et 150°. L'exactitude de l'angle choisi est assurée par la précision de la coupe d'onglet, précision qu'il est possible d'obtenir de manière tout à fait satisfaisante avec les techniques classiques de sectionnement des profilés. L'onglet une fois réalisé, et les profilés mis en place, le dispositif selon l'invention va réaliser en une seule opération le rapprochement, la mise en butée, et le serrage de ceux-ci, assurant par voie de conséquence l'immobilisation de l'assemblage.

Sa conception lui permet en outre d'être totalement dissimulé à l'intérieur des cavités des deux profilés, même lorsque ceux-ci font un angle très aigu, ne laissant apparaître sur la surface extérieure aucune pièce ou organe proéminent révélant sa présence. Les seuls éléments apparents sur les profilés sont des perçages dont le rôle sera explicité plus bas. Mais la conception du présent dispositif le rend réversible, c'est-à-dire qu'il est possible d'assembler des profilés dont les perçages peuvent être situés indifféremment sur la face de l'assemblage située du côté du sommet de l'angle de raccordement (qu'on désignera par la suite "côté extérieur") ou sur la face située du côté opposé ("côté intérieur"). Il est ainsi possible d'assembler par le côté intérieur des profilés, de façon à laisser une face extérieure lisse - ou inversement. En variante, il est même possible d'envisager un dispositif selon l'invention utilisant des perçages sur les faces latérales, ou même doté de moyens d'accrochage totalement dissimulés. La commodité d'emploi du dispositif lui permet ainsi de s'adapter à la plupart des situations rencontrées couramment au cours du montage des profilés.

A cette fin, le dispositif selon l'invention, qui est du même type que celui du US-A- 2 994 414 précité, comporte: un noyau d'assemblage susceptible de coopérer avec les faces intérieures des profilés selon une surface de roulement, du côté du sommet de l'angle de raccordement, et selon deux arêtes d'appui et de pivotement, du côté opposé au sommet de l'angle de raccordement; une biellette susceptible de se déplacer à l'intérieur du noyau selon un mouvement de translation en direction du sommet de l'assemblage, cette biellette reliant ensemble avec articulation les premières extrémités des tirants; et des moyens pour assurer le déplacement relatif de la biellette par rapport au noyau.

Ces derniers moyens sont eux-mêmes constitués de deux éléments formant vis et écrou, la tête de l'un des éléments venant faire pression sur la face extérieure du noyau, et la tête de l'autre élément venant faire pression sur la face intérieure de la biellette, de manière que la mise sous tension de ces deux éléments assure le rapprochement et la mise en butée des profilés, à la fois par une traction transmise par la biellette à l'un et l'autre des tirants, et par une pression exercée sur les arêtes d'appui du noyau.

De plus, ces deux éléments sont de mêmes dimensions extérieures, de manière que l'un ou l'autre puisse être indifféremment mis en place dans un logement pratiqué dans la partie du noyau situé du côté extérieur de l'assemblage. C'est ainsi que, par démontage et permutation de la vis et de l'écrou, on pourra présenter la tête de vis soit vers l'intérieur, soit vers l'extérieur de l'assemblage, de manière à permettre la mise sous tension du dispositif avec un outil introduit par un orifice pratiqué dans la face du profilé, intérieure ou extérieure, en regard de la tête de vis.

Pour permettre un démontage aisé, les moyens d'accrochage des tirants aux profilés comportent avantageusement au moins un pion, de préférence rétractable, solidaire du tirant, et susceptible d'être introduit dans un orifice pratiqué dans le profilé.

De manière également avantageuse, l'ensemble biellette-tirants est susceptible d'être retourné de manière à pouvoir introduire les pions dans des orifices pratiqués soit sur une face déterminée - par exemple, la face intérieure - des profilés, soit sur l'autre face - par exemple, la face extérieure - assurant ainsi la réversibilité évoquée plus haut.

D'autres caractéristiques et avantages de l'invention apparaîtront à la lecture de la description ci-dessous, faite en référence aux dessins annexés, où:

- la figure 1 représente une vue en coupe du dispositif selon l'invention, en place dans l'assemblage, où la fixation et le serrage sont réalisés du côté intérieur de l'assemblage.

- la figure 2 représente la même figure, mais avec la fixation et le serrage réalisés du côté extérieur de l'assemblage.

- la figure 3 est une vue en perspective de l'ensemble avant son assemblage (montage par l'extérieur).

- la figure 4 montre le positionnement de la pièce centrale du dispositif pour différentes valeurs de l'angle d'assemblage.

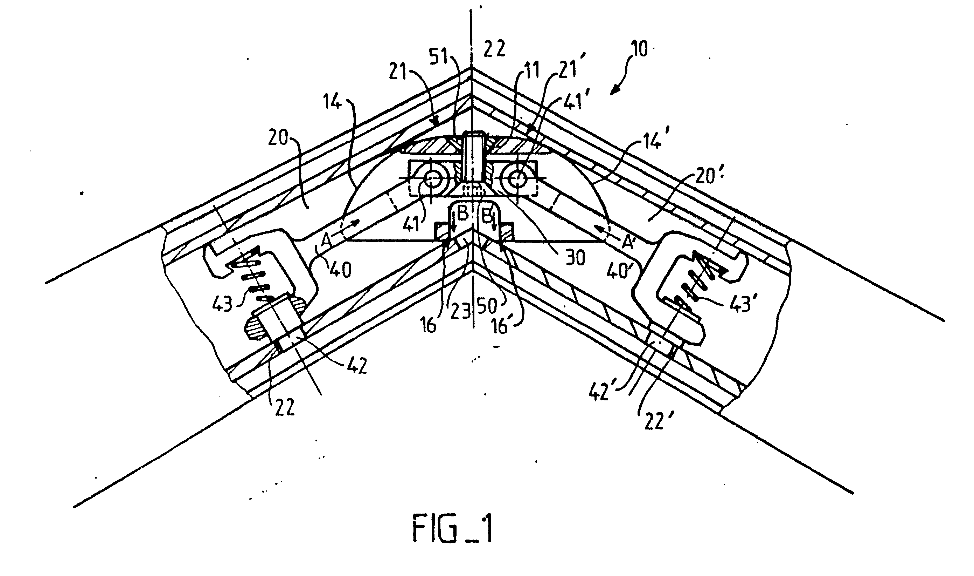

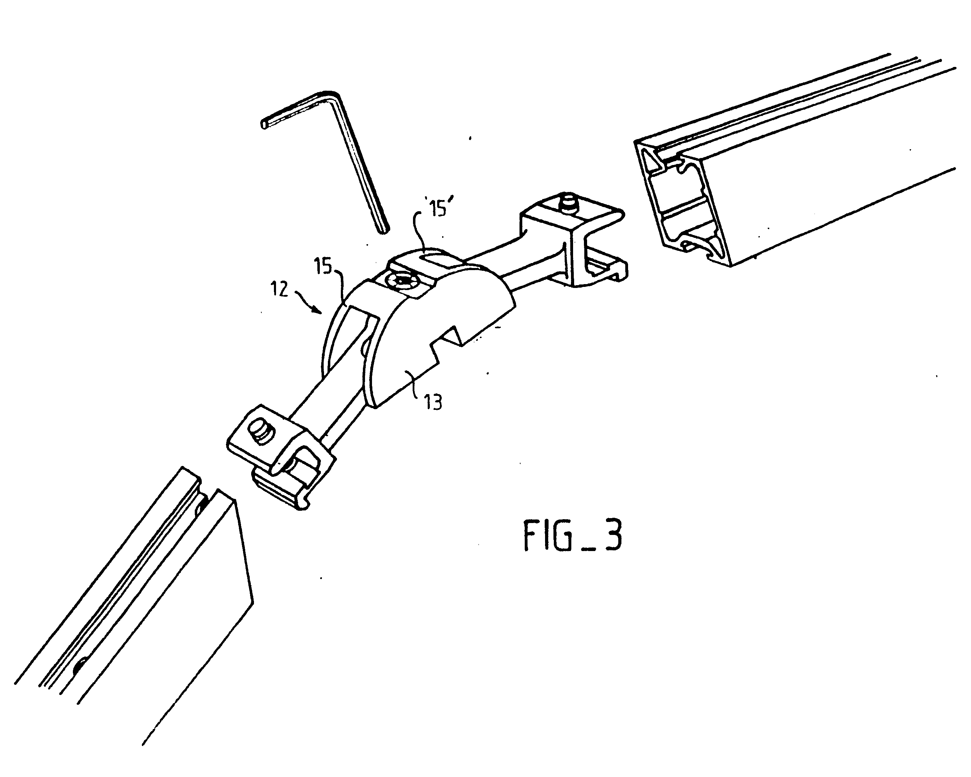

Sur la figure 1, on a référencé en 10 un noyau d'assemblage placé dans l'une et l'autre des cavités 20 et 20' des deux profilés, comportant une face extérieure munie d'un logement de vis 11. Il comporte également deux faces latérales planes parallèles (visibles sur la figure 3, où elles sont référencées 12 et 13) dont le contour présente deux arcs de cercle 14 et 14' symétriques destinés chacun à venir - avantageusement, mais non nécessairement - en contact avec la face 21 ou 21' de la cavité située du côté extérieur de l'assemblage; ce contour définit ainsi deux portions de cylindre (15 et 15' sur la figure 3), formant surfaces de roulement et tangentes aux plans constitués par les faces 21 et 21'. Le noyau comporte enfin une face intérieure comportant elle-même deux arêtes d'appui rectilignes 16 et 16', perpendiculaires aux plans des faces latérales 12 et 13, et passant par les axes des portions de cylindre 15 et 15'.

Une biellette 30 est disposée à l'intérieur du noyau 10; elle est symétrique, et susceptible de se déplacer en translation dans la direction de l'axe 22, bissectrice de l'angle formé par les deux profilés 20 et 20', et matérialisé par la coupe d'onglet.

La biellette 30 est reliée à deux tirants 40 et 40' disposés dans l'une et l'autre des cavités 20 et 20'. Chacun de ces tirants comporte à une extrémité une articulation 41, 41' assurant la liaison avec la biellette 30, et à son autre extrémité des moyens d'accrochage qui peuvent être constitués, comme dans l'exemple décrit, de pions rétractables 42, 42' pénétrant dans des orifices 22, 22' pratiqués dans les profilés. Des ressorts 43 et 43', solidaires des tirants 40 et 40', assurent au pion le passage de la position rétractée à la position fonctionnelle (pion occupant l'orifice du profilé).

Enfin, des moyens de mise sous tension de la biellette sont constitués de deux éléments 50 et 51 formant vis et écrou. Sur la figure 1, l'élément 50 est une vis à tête creuse à 6 pans venant faire pression sur la face intérieure de la biellette 30, et l'élément 51 un écrou, placé dans le logement 11 du noyau 10, et venant donc faire pression sur la face extérieure de celui-ci.

Pour réaliser l'assemblage, on met en place les tirants 40 et 40' dans les cavités 20 et 20' des profilés préalablement coupés d'onglet jusqu'à ce que les pions 42 et 42' viennent se loger dans les orifices 22 et 22'. On conçoit alors qu'il est avantageux qu'un contact soit assuré entre le contour 14, 14' du noyau et les faces 21, 21' des profilés: un léger frottement permet que le dispositif se maintienne en place au cours des opérations d'assemblage. Mais ce contact n'est pas nécessaire pour assurer le serrage final, et il est possible de concevoir d'autres formes de noyau ne présentant pas les arcs de cercle 14 et 14', sans pour autant sortir du domaine de l'invention. On peut alors mettre sous tension les moyens de serrage 50 et 51 à l'aide d'un outil introduit dans le trou 23. De cette manière, la biellette 30 va se déplacer vers le sommet de l'assemblage et provoquer le rapprochement, la mise en butée et le serrage des profilés, d'une part par une traction exercée sur les tirants et transmise aux profilés par les pions (représentée par les flèches A et A'), d'autre part par une pression exercée sur les arêtes 16 et 16' (flèches B et B') ; cet effort, dû à la réaction du noyau 10 au moment du serrage de la vis 50 sur l'écrou 51, va également tendre à rapprocher les deux profilés par un effet de pincement exercé par les deux arêtes. L'effet est d'autant plus prononcé que l'angle est aigu.

Avantageusement, l'ensemble du dispositif est monté de manière flottante. Par "montage flottant", on entend un assemblage qui permet, outre le mouvement de translation de la biellette, un jeu au pivotement relatif de celle-ci par rapport au noyau, et autorise le serrage de l'assemblage même si la biellette n'est pas rigoureusement perpendiculaire à la bissectrice de l'angle; l'écrou 51 étant alors légèrement en porte-à-faux dans la cavité 11 du noyau. Un tel montage permet de rattraper d'une part d'éventuelles imprécisions de perçage des orifices 22, 22', et d'autre part un positionnement du noyau 10 qui ne serait pas parfaitement symétrique.

Sur la figure 1, le dispositif a été représenté prévu pour un montage par l'intérieur. En effet, les côtés extérieurs des profilés sont lisses, et les trous 22 et 22' (logements des pions) et 23 (passage de l'outil de serrage) sont pratiqués sur les faces intérieures des profilés.

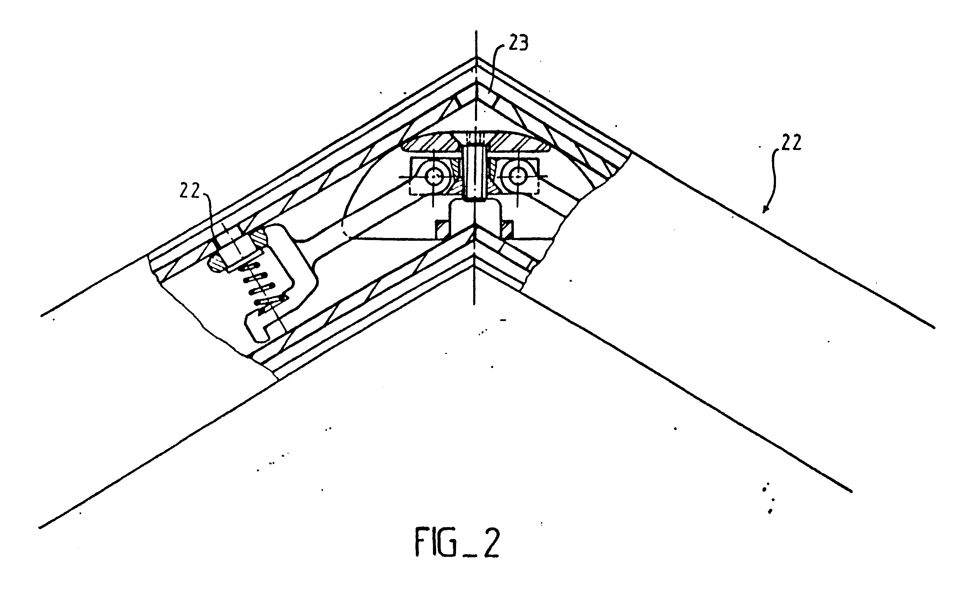

Par contre, sur la figure 2, homologue de la figure 1 pour un serrage extérieur, la disposition est inversée: les faces intérieures sont lisses, et les trous 22, 22' et 23 sont percés sur la face extérieure.

Pour passer d'un montage à l'autre, il suffit de démonter la vis 50 et l'écrou 51, retourner l'ensemble tirants-biellette de manière à présenter les pions vers l'extérieur, puis permuter la vis et l'écrou (la substitution est possible si la tête de la vis 50, et l'écrou 51 ont mêmes dimensions extérieures, de manière que l'un ou l'autre puisse être indifféremment placé dans le logement 11 que présente le noyau 10).

On constate ainsi la réversibilité du dispositif selon l'invention, un ensemble unique permettant, par démontage et permutation de deux pièces, de réaliser un assemblage, soit par l'intérieur, soit par l'extérieur.

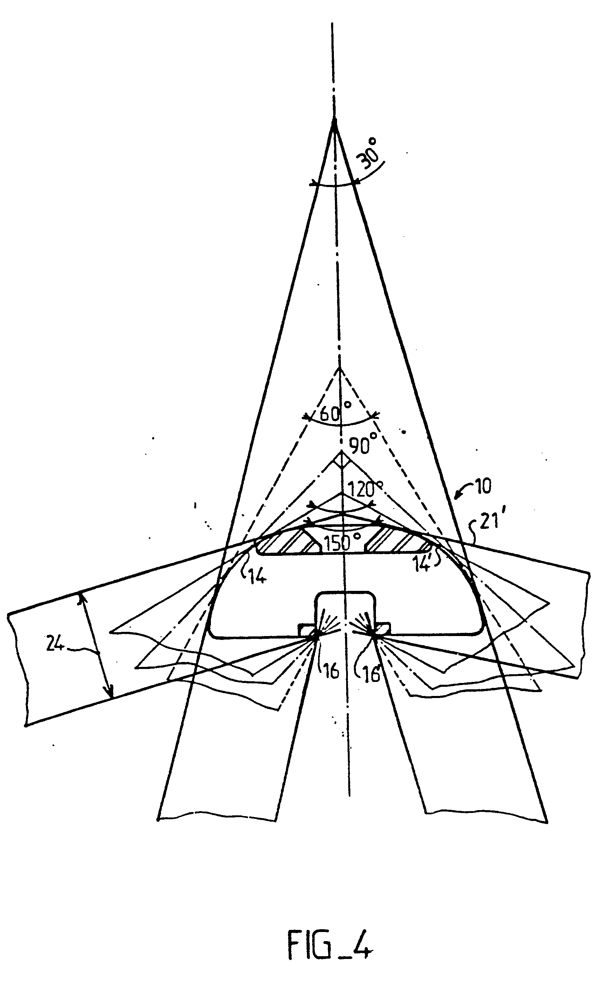

La figure 4 explicite la forme préférée du contour 14 de la pièce 10. On a représenté schématiquement cette pièce placée dans la cavité des profilés assemblés à 30° (traits continus épais), 60° (traits pointillés), à angle droit (traits mixtes), à 120° (traits continus fins) et à 150° (traits continus épais). En toute hypothèse, les profilés prennent appui sur les arêtes 16 et 16'. Comme le dispositif est prévu pour des profilés dont la largeur 24 de la cavité intérieure, ou "module", a une valeur définie déterminée, normalisée, il apparaît que, si l'on veut que le profilé reste dans tous les cas de figure en contact sur les deux faces de sa cavité avec la pièce 11, il faudra donner à cette dernière, sur sa face extérieure, un profil qui sera défini comme l'enveloppe des faces 21 et 21' des profilés. On détermine ainsi, de façon caractéristique de l'invention, un contour 14 ou 14' sensiblement en forme d'arc de cercle, centré sur l'arête 16 ou 16'. Les deux arcs de cercle, symétriques, auront avantageusement pour rayon la valeur du module 24 des profilés à assembler.

## Revendications

1. Dispositif d'assemblage de deux profilés creux coupés d'onglet selon un angle donné, susceptible d'être contenu à l'intérieur des cavités (20, 20') des deux profilés, comportant deux tirants (40, 40') disposés symétriquement, dont les premières extrémités respectives sont reliées par une liaison articulée (41, 41'), et comportant à leur seconde extrémité respective des moyens d'accrochage (42, 42') aux profilés, caractérisé en ce qu'il comporte en outre:
- un noyau d'assemblage (10) susceptible de coopérer avec les faces intérieures des profilés selon une surface (14, 14') de roulement, du côté du sommet de l'angle de raccordement, et selon deux arêtes (16, 16') d'appui et de pivotement, du côté opposé au sommet de l'angle de raccordement;
- une biellette (30) susceptible de se déplacer à l'intérieur du noyau selon un mouvement de translation en direction du sommet de l'assemblage, cette biellette reliant ensemble avec articulation les premières extrémités des tirants; et
- des moyens (50, 51) pour assurer le déplacement relatif de la biellette par rapport au noyau.

2. Dispositif selon la revendication 1, caractérisé en ce que les moyens pour assurer le déplacement relatif de la biellette par rapport au noyau sont constitués de deux éléments formant vis (50) et écrou (51), la tête de l'un des éléments venant faire pression sur la face extérieure de noyau (10), et la tête de l'autre élément venant faire pression sur la face intérieure de la biellette (30), de manière que la mise sous tension de ces deux éléments assure le rapprochement et la mise en butée des profilés, à la fois par une traction (A, A') transmise par la biellette à l'un et l'autre des tirants, et par une pression (B, B') exercée sur les arêtes (16, 16') d'appui du noyau.

3. Dispositif selon l'une des revendications précédentes, caractérisé en ce que la surface (14, 14') de roulement du noyau comporte deux portions symétriques de cylindre, d'axes sensiblement confondus avec les arêtes (16, 16') d'appui du noyau, et de rayon voisin du module des profilés.

4. Dispositif selon l'une des revendications précédentes, caractérisé en ce que l'ensemble noyau -moyens de serrage - biellette est monté de manière flottante, de façon à assurer un jeu au pivotement relatif de la billette par rapport au noyau.

5. Dispositif selon l'une des revendications précédentes, caractérisé en ce que les moyens d'accrochage des tirants aux profilés comportent au moins un pion (42, 42') solidaire du tirant, et susceptible d'être introduit dans un orifice (22, 22') pratiqué dans le profilé, de manière qu'une traction exercée sur les tirants soit transmise aux profilés par l'intermédiaire desdits pions.

6. Dispositif selon la revendications 5, caractérisé en ce que les pions (22, 22') sont rétractables à l'intérieur du tirant, de manière à permettre l'insertion de celui-ci dans la cavité du profilé, le passage de la position rétractée à la position fonctionnelle étant assuré par l'intermédiaire d'un ressort (43, 43') de rappel solidaire du tirant.

7. Dispositif selon l'une des revendications précédentes, caractérisé en ce que l'ensemble biellette tirants est susceptible d'être retourné de manière à pouvoir introduire les pions dans des orifices pratiqués soit sur une face déterminée des profilés, soit sur une face opposée.

8. Dispositif selon l'une des revendications précédentes, caractérisé en ce que la tête de l'élément (50) formant vis, et l'élément (51) formant écrou, sont de mêmes dimensions extérieures, de manière que l'un ou l'autre puisse être indifféremment mis en place dans un logement (11) pratiqué dans la partie du noyau situé du côté extérieur de l'assemblage.

9. Dispositif selon l'une des revendications précédentes, caractérisé en ce que la forme du noyau, et l'articulation des tirants à la biellette, permettent que l'ensemble du dispositif puisse être contenu à l'intérieur de deux profilés coupés d'onglet selon un angle quelconque compris

entre 30° et 150°.

**Patentansprüche**

1. Vorrichtung zum Zusammenbau von zwei unter einem vorgegebenen Winkel auf Gehrung geschnittenen Hohlprofilen, die in das Innere (20, 20') der Profile eingebracht werden kann und zwei symmetrisch angeordnete Schenkel (40, 40') umfasst, welche jeweils an einem Ende durch eine Gelenkverbindung (41, 41') verbunden sind und am anderen Ende Halterungen (42, 42') zur Befestigung an den Profilen tragen, dadurch gekennzeichnet, dass sie ausserdem folgende Teile umfasst:
- ein Kernstück (10), das geeignet ist, mit den Innenflächen der Profile über eine der Spitze des Verbindungswinkels zugewendete Abwälzfläche (14, 14') und zwei Stütz- und Schwenkkanten (16, 16') auf der der Spitze des Verbindungswinkels entgegengesetzen Seite zusammenzuwirken;
- ein Verbindungsstück (30), das sich innerhalb des Kernstückes in Richtung auf die Spitze des Verbindungswinkels verschieben lässt, und an dem die einen Enden der Schenkel angelenkt sind; und
- Mittel (50, 51), um die Verschiebung des Verbindungsstückes gegenüber dem Kernstück zu ermöglichen.

2. Vorrichtung nach Anspruch 1, dadurch gekennzeichnet, dass die die Verschiebung des Verbindungsstückes gegenüber dem Kernstück ermöglichenden Mittel aus zwei Teilen bestehen und zwar Schraube (50) und Mutter (51), wobei der Kopf des einen Teiles auf die Aussenfläche des Kernstückes (10) und der Kopf des anderen Teiles auf die Innenfläche des Verbindungsstückes (30) drücken, so dass beim Spannen dieser beiden Teile die Profile sowohl durch Zugeinwirkung (A, A') des Verbindungsstückes auf die beiden Schenkel als durch Druckwirkung (B, B') des Kernstückes auf die Kanten (16, 16') aufeinanderzubewegt und zusammengefügt werden.

3. Vorrichtung nach einem der vorstehenden Ansprüche, dadurch gekennzeichnet, dass die Abwälzfläche (14, 14') des Kernstückes zwei symmetrische Zylinderteile aufweist, deren Achsen im wesentlichen mit den Kanten (16, 16') zusammenfallen, und deren Radius im wesentlichen dem Innenquerschnitt der Profile entspricht.

4. Vorrichtung nach einem der vorstehenden Ansprüche, dadurch gekennzeichnet, dass die aus Kernstück, Spannmitteln und Verbindungsstück gebildete Einheit beweglich angebracht ist, um ein Schwenkspiel des Verbindungsstückes gegenüber dem Kernstück zu gewährleisten.

5. Vorrichtung nach einem der vorstehenden Ansprüche, dadurch gekennzeichnet, dass die Halterungen der Schenkel mindestens einen mit dem Schenkel fest verbunden Stift (42, 42') tragen, der in eine Öffnung (22, 22') im Profil eingeführt werden kann, so dass eine auf die Schenkel wirkende Zugkraft über diese Stifte auf die Profile übertragen wird.

6. Vorrichtung nach Anspruch 5, dadurch gekennzeichnet, dass die Stifte (22, 22') in das Schenkelinnere eingezogen werden können, so dass der Schenkel in den Profilhohlraum eingeführt werden kann, wobei der Übergang von der eingezogenen zur Haltestellung durch eine mit dem Schenkel fest verbundene Feder (43, 43') bewirkt wird.

7. Vorrichtung nach einem der vorstehenden Ansprüche, dadurch gekennzeichnet, dass die durch das Verbindungstück und die Schenkel gebildete Einheit umgedreht werden kann, so dass die Stifte in Öffnungen entweder in einer bestimmten Profilfläche oder in einer ihr entgegengesetzten Fläche eingreifen können.

8. Vorrichtung nach einem der vorstehenden Ansprüche, dadurch gekennzeichnet, dass der Kopf des eine Schraube bildenden Teiles (50) und das eine Mutter bildende Teil (51) gleiche Aussenabmessungen haben, so dass wahlweise beide Teile in einer Aussparung (11) in dem aussen liegenden Teil des Kernstückes gelagert werden können.

9. Vorrichtung nach einem der vorstehenden Ansprüche, dadurch gekennzeichnet, dass aufgrund der Form des Kernstückes und der Anlenkung der Schenkel an das Verbindungsstück die gesamte Vorrichtung im Innern von zwei unter einem beliebigen Winkel zwischen 30° und 150° auf Gehrung geschnittenen Profilen eingebracht werden kann.

**Claims**

1. Device for assembling two hollow profile members cut to a mitre to a given angle, adapted to be contained within cavities (20, 20') in the two profile members, comprising two tie rods (40, 40') disposed symmetrically, of which the respective first ends are connected by an articulated link (41, 41'), and comprising at their respective second end means of attachment (42, 42') to the profile members,
characterised in that it also comprises:
- an assembly core (10) adapted to cooperate with the inner faces of the profile members on a rolling surface (14, 14') on the side of the apex of the connection angle, and on two bearing and pivoting edges (16, 16') on the side opposite the apex of the connecting angle;
- a connecting rod (30) adapted for movement inside the core in a translatory movement in the direction of the apex of the assembly, said connecting rod articulatingly joinig the first ends of the tie rod; and
- means (50, 51) to ensure relative displacement of the connecting rod in relation to the core.

2. Device according to claim 1, characterised in that the means to ensure relative displacement of the connecting rod in relation to the core consist of two elements forming screw (50) and nut (51), the head of one of the elements applying pressure of the outer face of the core (10), and the head of the outer element applying pressure to the inner face of the connecting rod (30), so that tensioning of these two elements bring together and results in abutment of the profile members, at once by a traction (A, A') transmitted by the connecting rod to the one and the other of the tie rods, and by a pressure (B, B') exerted on the bearing edges (16, 16') of the core.

3. Device according to one of the preceding claims, characterised in that the rolling surface (14, 14') of the core comprises two symmetrical portions of a cylinder of axes which substantially coincide with the bearing edges (16, 16') of the core and of radius close to the modulus of the profile members.

4. Device according to one of the preceding claims, characterised in that the core - clamping means - connecting rod assembly is floatingly mounted so as to provide a clearance for relative pivoting of the connecting rod relative to the core.

5. Device according to one of the preceding claims, characterised in that the means of attachment of the tie rods to the profile members comprise at least one stud (42, 42') rigid with the tie rod and adapted to be introduced into an orifice (22, 22') provided in the profile member, so that any traction applied to the tie rods is transmitted to the profile members through said studs.

6. Device according to claim 5, characterised in that the studs (22, 22') are retractable within the tie rod to allow the latter to be inserted into the cavity in the profile member, movement from the retracted position to the operative position being carried out by a return spring (43, 43') rigid with the tie rod.

7. Device according to one of the preceding claims, characterised in that the connecting rod-tie rods assembly is adapted to be turned round so that the studs can be introduced into the orifices provided either on a given face of the profile members, or on an opposite face.

8. Device according to one of the preceding claims, characterised in that the head of the element (50), forming a screw, and the element (51) forming a nut, have the same outside dimensions so that one or the other can be indiscriminately placed in a seating (11) provided in the part of the core which is situated on the outer side of the assembly.

9. Device according to one of the preceding claims, characterised in that the form of the core and the articulation of the tie rods to the connecting rod, make it possible for the whole apparatus to be contained inside two profile member mitred to any angle between 30° and 150°.

FIG_1

0 064 001

FIG_2

0 064 001

FIG_3

0 064 001

FIG_4